(19) Europäisches Patentamt
European Patent Office
Office européen des brevets

(11) **EP 3 930 308 A1**

(12) **EUROPEAN PATENT APPLICATION**

(43) Date of publication:
**29.12.2021 Bulletin 2021/52**

(21) Application number: **21179424.3**

(22) Date of filing: **15.06.2021**

(51) Int Cl.:
*H04N 5/33* (2006.01)    *H04N 9/04* (2006.01)
*H04N 9/07* (2006.01)    *H04N 9/64* (2006.01)
*H04N 9/67* (2006.01)    *H04N 1/60* (2006.01)
*H04N 5/265* (2006.01)    *H04N 5/232* (2006.01)
*B60R 1/00* (2006.01)    *H04N 5/247* (2006.01)
*H04N 7/18* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2020 JP 2020110280**

(71) Applicant: **CANON KABUSHIKI KAISHA**
**Ohta-ku**
**Tokyo 146-8501 (JP)**

(72) Inventor: **HIKOSAKA, Shingo**
**Tokyo, 146-8501 (JP)**

(74) Representative: **TBK**
**Bavariaring 4-6**
**80336 München (DE)**

(54) **IMAGE PROCESSING DEVICE, IMAGING SYSTEM, MOVING BODY, IMAGE PROCESSING METHOD AND PROGRAM**

(57)    Provided is an image processing device including an acquisition unit configured to acquire a first image data that is captured based on visible light and a second image data that is captured based on infrared light, a composition coefficient calculating unit configured to calculate a composition coefficient based on the second image data and a third image data including a luminance information that is extracted from the first image data, and a composition unit configured to calculate a fourth image data by a weighted addition of the second image data and the luminance information by using the composition coefficient.

FIG. 5

**Description**

BACKGROUND OF THE INVENTION

Field of the Invention

The present disclosure relates to an image processing device, an imaging system, a moving body and a program.

Description of the Related Art

Japanese Patent Application Laid-Open No. 2011-239259 discloses an image processing device for composing color image data having only wavelength components in a visible light range and monochrome image data having only wavelength components other than the visible light range. The image processing device disclosed in Japanese Patent Application Laid-Open No. 2011-239259 extracts color information from color image data, extracts luminance information from monochrome image data, and generates composition image data by composing the color information and the luminance information. Thus, the camera provided with the image processing device disclosed in Japanese Patent Application Laid-Open No. 2011-239259 can clearly photograph the object of interest even under a photographing condition in which light scattering due to fog, haze or the like can occur, can cope with a photographing condition with low illuminance and can photograph color images.

In the image processing device disclosed in Japanese Patent Application Laid-Open No. 2011-239259, since image data photographed by light of different wavelengths are composed, an unnatural image may be generated depending on the optical characteristics of the object.

SUMMARY OF THE INVENTION

Therefore, the present disclosure intends to provide an image processing device, an imaging system, a moving body, an image processing method and a program which can generate a more natural composition image.

According to an aspect of the present disclosure, there is provided an image processing device including an acquisition unit configured to acquire a first image data that is captured based on visible light and a second image data that is captured based on infrared light, a composition coefficient calculating unit configured to calculate a composition coefficient based on the second image data and a third image data including a luminance information that is extracted from the first image data, and a composition unit configured to calculate a fourth image data by a weighted addition of the second image data and the luminance information by using the composition coefficient.

According to another aspect of the present disclosure, there is provided an image processing method including acquiring a first image data that is captured based on visible light and a second image data that is captured based on infrared light, calculating a composition coefficient based on the second image data and a third image data including a luminance information that is extracted from the first image data, and calculating a fourth image data by a weighted addition of the second image data and the luminance information by using the composition coefficient.

According to yet another aspect of the present disclosure, there is provided a program that causes a computer to perform an image processing method including acquiring a first image data that is captured based on visible light and a second image data that is captured based on infrared light, calculating a composition coefficient based on the second image data and a third image data including a luminance information that is extracted from the first image data, and calculating a fourth image data by a weighted addition of the second image data and the luminance information by using the composition coefficient.

Further features of the present invention will become apparent from the following description of exemplary embodiments with reference to the attached drawings.

BRIEF DESCRIPTION OF THE DRAWINGS

FIG. 1 is a block diagram illustrating a schematic configuration of an imaging system according to a first embodiment.
FIG. 2 is a block diagram illustrating a schematic configuration of an imaging device according to the first embodiment.
FIG. 3 is a circuit diagram of a pixel according to the first embodiment.
FIG. 4 is a schematic diagram illustrating an arrangement of color filters according to the first embodiment.
FIG. 5 is a functional block diagram illustrating a schematic configuration of a signal processing unit according to the first embodiment.
FIG. 6 is a flowchart showing an overview of an image composition process performed in the imaging system according to the first embodiment.

FIGS. 7A, 7B, 7C and 7D are schematic diagrams illustrating color image data and infrared image data according to the first embodiment.

FIGS. 8A, 8B and 8C are schematic diagrams illustrating HSV data according to the first embodiment.

FIGS. 9A and 9B are diagrams illustrating configuration examples of an imaging system and a moving body according to a second embodiment.

DESCRIPTION OF THE EMBODIMENTS

Preferred embodiments of the present invention will now be described in detail in accordance with the accompanying drawings. Same components or corresponding components across the drawings are labeled with same references, and the description thereof may be omitted or simplified.

First Embodiment

In the present embodiment, an example of an imaging system to which the image processing device and the image processing method of the present disclosure are applied will be described.

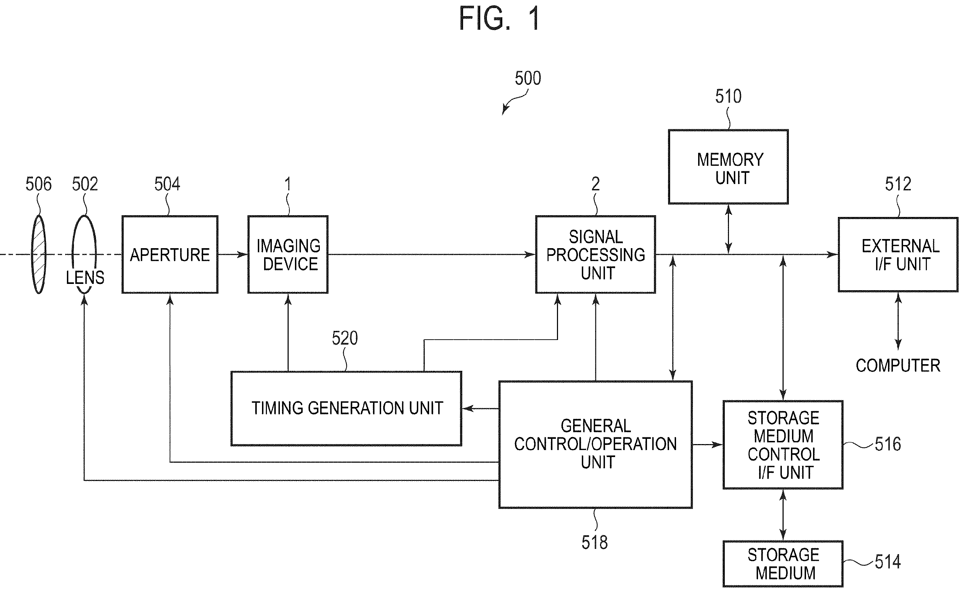

FIG. 1 is a block diagram illustrating a schematic configuration of an imaging system 500 according to the present embodiment. The imaging system 500 according to the present embodiment is not limited to but, can be applied to digital still cameras, digital camcorders, camera heads, copiers, fax machines, mobile phones, in-vehicle cameras, observation satellites or the like.

The imaging system 500 illustrated in FIG. 1 includes an imaging device 1, a signal processing unit 2, a lens 502, an aperture 504, a barrier 506, a timing generation unit 520, a general control/operation unit 518, a memory unit 510, a storage medium control I/F unit 516, and an external I/F unit 512.

The lens 502 captures an optical image of an object onto an imaging region of the imaging device 1. The aperture 504 changes a light amount passing through the lens 502. The barrier 506 protects the lens 502. The imaging device 1 outputs a signal based on the optical image captured by the lens 502 to the signal processing unit 2. The imaging device 1 is, for example, a complementary metal oxide semiconductor (CMOS) image sensor.

The signal processing unit 2 performs desired processes such as image composition, correction, data compression on the signal output from the imaging device 1. The signal processing unit 2 is, for example, a digital signal processing circuit including a processor for performing arithmetic processes for signal processing, a memory for temporarily storing data during arithmetic processes, or the like.

The signal processing unit 2 may be mounted on the same substrate as the imaging device 1, or may be mounted on another substrate. Further, a part of the function of the signal processing unit 2 may be mounted on the same substrate as the imaging device 1, and another part of the function of the signal processing unit 2 may be mounted on another substrate. The imaging device 1 may output a digital signal or output an analog signal. In the case where the imaging device 1 outputs an analog signal, the signal processing unit 2 may further include an AD converter. In the following description, it is assumed that the imaging device 1 includes an AD converter and outputs a digital signal to the signal processing unit 2.

The timing generation unit 520 outputs various timing signals to the imaging device 1 and the signal processing unit 2. The general control/operation unit 518 is a control unit that controls driving and arithmetic processes of the entire imaging system 500. Herein, the control signal such as timing signal may be input from the outside of the imaging system 500, and the imaging system 500 may include at least the imaging device 1 and the signal processing unit 2 for processing the signal output from the imaging device 1.

The memory unit 510 is a frame memory unit for temporarily storing image data. The storage medium control I/F unit 516 is an interface unit for recording or reading image data on or from the storage medium 514. The external I/F unit 512 is an interface unit for communicating with an external computer or the like. The storage medium 514 is a removable storage medium such as a semiconductor memory for recording or reading image data.

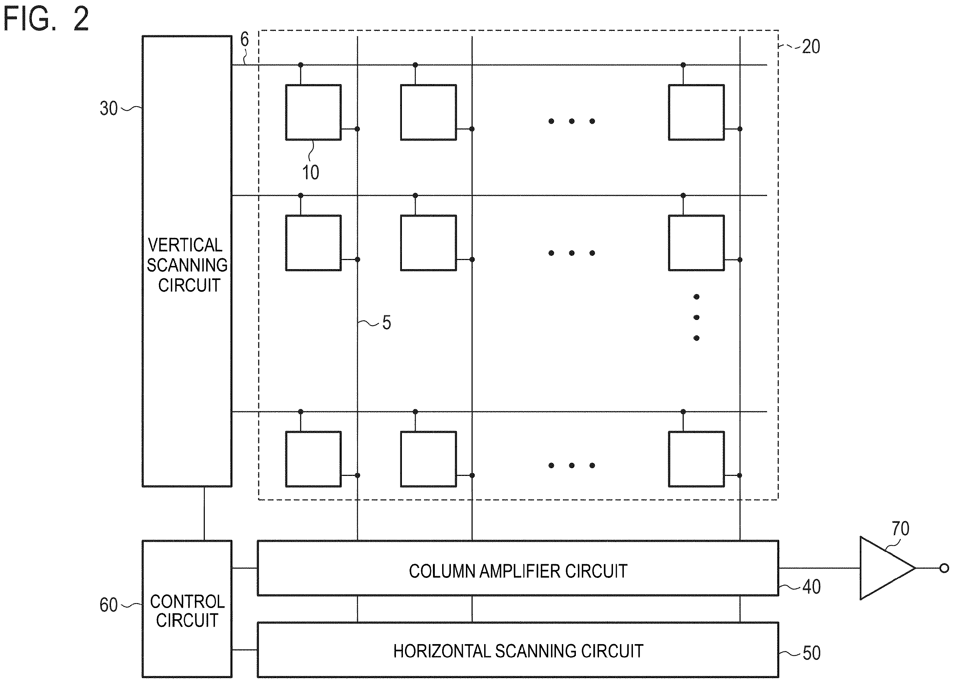

FIG. 2 is a block diagram illustrating a schematic configuration of an imaging device 1 according to the present embodiment. The imaging device 1 includes a pixel array 20, a vertical scanning circuit 30, a column amplifier circuit 40, a horizontal scanning circuit 50, a control circuit 60, and an output circuit 70. These circuits may be formed on one or more semiconductor substrates. The pixel array 20 includes a plurality of pixels 10 arranged in a plurality of rows and a plurality of columns. The vertical scanning circuit 30 is a scanning circuit that supplies control signals for controlling transistors included in the pixel 10 to be on (conductive state) or off (non-conductive state) via a control signal line 6 provided in each row of the pixels 10. The vertical scanning circuit 30 may include a shift register or an address decoder. Since the control signal supplied to each pixel 10 may include a plurality of types of control signals, the control signal line 6 of each row may be configured as a set of a plurality of drive wirings. Each column of the pixels 10 is provided with column signal line 5, and signals from the pixels 10 are read out to the column signal line 5 for each column.

The column amplifier circuit 40 performs processing such as amplification or correlated double sampling processing or the like on the pixel signal output to the column signal line 5. The horizontal scanning circuit 50 supplies a control signal for controlling on or off the switch connected to the amplifier of the column amplifier circuit 40. The horizontal scanning circuit 50 may include a shift register or an address decoder. The output circuit 70 includes a buffer amplifier, a differential amplifier, or the like, and outputs a pixel signal from the column amplifier circuit 40 to a signal processing unit 2 outside of the imaging device 1. It should be noted that the imaging device 1 may be configured to output a digital image signal by further including an AD conversion unit. For example, the column amplifier circuit 40 may include an AD conversion unit. The control circuit 60 controls the operation timings of the vertical scanning circuit 30, the column amplifier circuit 40, and the horizontal scanning circuit 50.

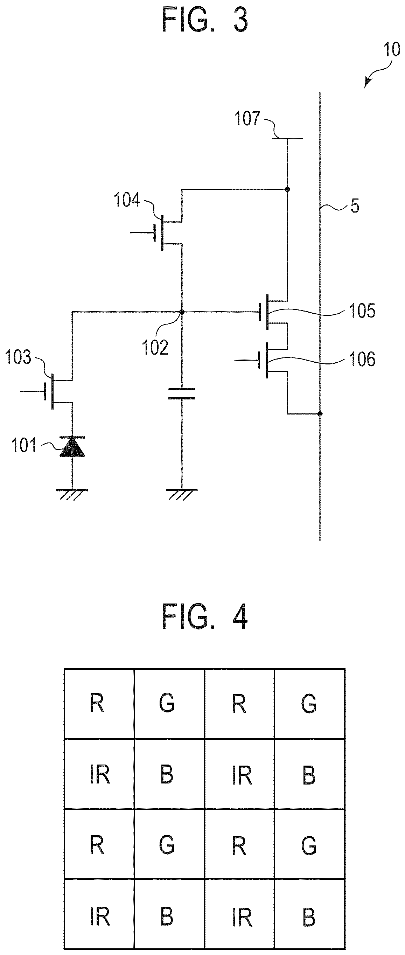

FIG. 3 is a circuit diagram of a pixel 10 according to the present embodiment. The pixel 10 includes a photoelectric conversion unit 101, a floating diffusion (hereinafter, FD) 102, a transfer transistor 103, a reset transistor 104, a source follower transistor (hereinafter, SF transistor) 105, and a selection transistor 106. These transistors may be composed of MOS transistors having a gate electrode as a control electrode. To the gates of the transfer transistor 103, the reset transistor 104 and the selection transistor 106, control signals for controlling these transistors are input from the vertical scanning circuit 30 via the control signal line 6.

The photoelectric conversion unit 101 is a photoelectric conversion element that generates charges according to incident light by photoelectric conversion and accumulates the charges. The photoelectric conversion unit 101 may be constituted by a photodiode formed in a semiconductor substrate. The anode of the photodiode constituting the photoelectric conversion unit 101 is connected to a ground potential line having a ground potential, and the cathode thereof is connected to the source of the transfer transistor 103.

The drain of the transfer transistor 103, the source of the reset transistor 104, and the gate of the SF transistor 105 are connected to the FD 102. When the transfer transistor 103 is turned on, the charges of the photoelectric conversion unit 101 are transferred to the FD 102. The capacitance connected to the FD 102 in FIG. 3 indicates the capacitance generated in the FD 102. With this capacitance, the potential of the FD 102 changes according to the charges transferred from the photoelectric conversion unit 101.

The drain of the reset transistor 104 and the drain of the SF transistor 105 are connected to a potential line 107 having a power source potential. The source of the SF transistor 105 is connected to the drain of the selection transistor 106. The source of the selection transistor 106 is connected to the column signal line 5. The SF transistor 105 constitutes a source follower circuit together with a constant current source (not shown) connected to the column signal line 5. The source follower circuit outputs a signal based on the voltage of the FD 102 to the column signal line 5 via the selection transistor 106. The reset transistor 104 is turned on to reset the potential of the FD 102.

Each of the pixels 10 has a microlens (not shown) and a color filter (not shown) arranged on an optical path in which incident light is guided to the photoelectric conversion unit 101. The microlens condenses incident light to a photoelectric conversion unit 101. The color filter selectively transmits light of a predetermined color. In the following, for example, a color filter that mainly transmits red light may be referred to as a red color filter or the like.

FIG. 4 is a schematic diagram illustrating an arrangement of color filters according to the present embodiment. In FIG. 4, the colors of the color filters corresponding to the pixels 10 of four rows by four columns are denoted by references R, G, B, and IR. Reference R denotes a red color filter, reference G denotes a green color filter, and reference B denotes a blue color filter. Reference IR denotes a color filter that transmits infrared light. As illustrated in FIG. 4, one red color filter, one green color filter, and one blue color filter of visible light and one color filter for transmitting infrared light are arranged in a range of two rows by two columns. In the present arrangement example, the blocks of the above-described two rows by two columns are repeatedly arranged as a minimum unit. Note that, the visible light is typically light having a wavelength of 380 nm to 780 nm, and the infrared light is typically near-infrared light having a wavelength of 780 nm to 2.5 $\mu$m.

Note that the arrangement example of FIG. 4 is an example, and other arrangements of color filters may be employed. Further, color filters of colors other than those illustrated in FIG. 4 such as cyan, magenta, yellow and white may be arranged.

Thus, the imaging device 1 of the present embodiment has a pixel 10 for capturing color image having sensitivity in the visible light range and a pixel 10 for capturing infrared image having sensitivity in the infrared range. Thus, the imaging device 1 of the present embodiment can output image data captured based on visible light such as red, green, and blue and infrared light.

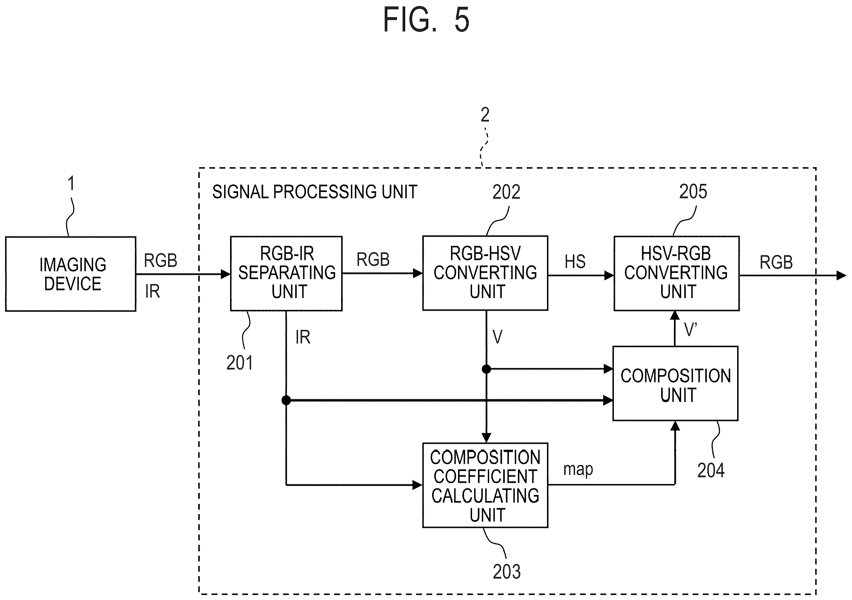

FIG. 5 is a functional block diagram illustrating the schematic configuration of the signal processing unit 2 according to the present embodiment. The signal processing unit 2 includes an RGB-IR separating unit 201, an RGB-HSV converting unit 202, a composition coefficient calculating unit 203, a composition unit 204, and an HSV-RGB converting unit 205. The functions of these respective units are realized by a processor in the signal processing unit 2 executing an image processing program and executing predetermined arithmetic processes on data input from the imaging device 1. Arrows in FIG. 5 indicate the flow of data, and references such as RGB in the vicinity of the arrows indicate the types of data.

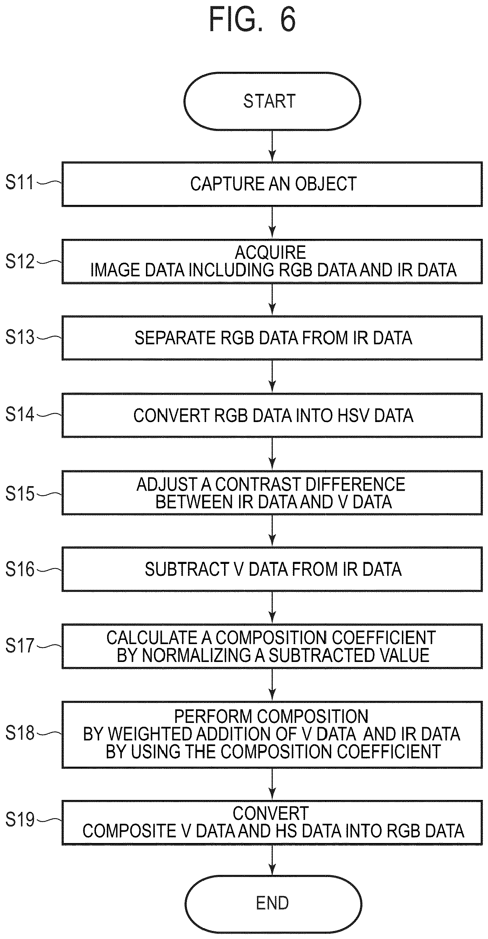

FIG. 6 is a flowchart showing an overview of an image composition processing performed in the imaging system 500 according to the present embodiment. An overview of the image composition processing of the present embodiment will be described with reference to FIG. 5 and FIG. 6.

In step S11, the imaging device 1 captures an object in accordance with a timing signal from the timing generation unit 520. The imaging device 1 captures image data based on visible light such as red, green and blue (RGB) and infrared light (IR), and outputs the captured image data to a signal processing unit 2.

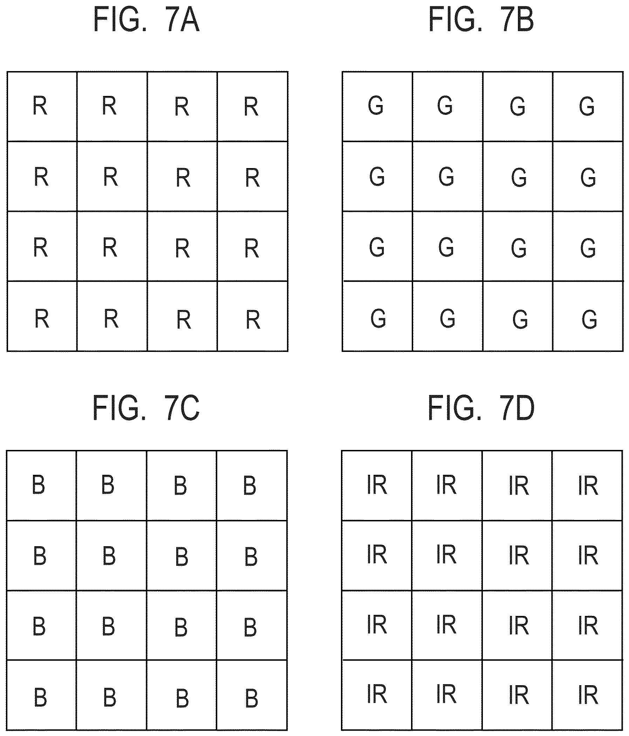

In step S12, the RGB-IR separating unit 201 performs a demosaicing process on the image data input from the imaging device 1 to generate color image data of an RGB model based on three colors of red, green, and blue and infrared image data based on infrared light. FIG. 7A schematically illustrates red image data, FIG. 7B schematically illustrates green image data, FIG. 7C schematically illustrates blue image data, and FIG. 7D schematically illustrates infrared image data. The frames denoted by R, G, B and IR in FIGS. 7A to 7D schematically illustrate the colors of pixels in the image data after demosaicing process.

In step S13, the RGB-IR separating unit 201 outputs the color image data (RGB) to the RGB-HSV converting unit 202, and outputs the infrared image data (IR) to the composition coefficient calculating unit 203 and the composition unit 204. In this manner, the RGB-IR separating unit 201 separates and outputs the color image data and the infrared image data.

As described above, the RGB-IR separating unit 201 functions as an acquisition unit for acquiring color image data (first image data) captured based on visible light and infrared image data (second image data) captured based on infrared light.

In step S14, the RGB-HSV converting unit 202 (first converting unit) converts the input color image data of the RGB model into color image data of the HSV model (third image data). The HSV model is a color space model consisting of three components: hue (H), saturation (S), and value (V). The hue indicates the type of color, the saturation indicates the vividness of the color, and the value indicates the brightness. In the present specification, hue and saturation are sometimes referred to as color information, and value is sometimes referred to as luminance information. Color information and luminance information can be separated and extracted by converting an RGB model into an HSV model. The RGB-HSV converting unit 202 outputs color information (HS) to the HSV-RGB converting unit 205, and outputs luminance information (V) to the composition coefficient calculating unit 203 and the composition unit 204.

Note that the converted model in step S14 is not limited to the HSV model, and it is sufficient as long as the luminance information indicating the brightness of the image can be calculated. For example, a color space model such as an HLS model or a YCbCr model may be used. By using these models, the color information and the luminance information can be separated.

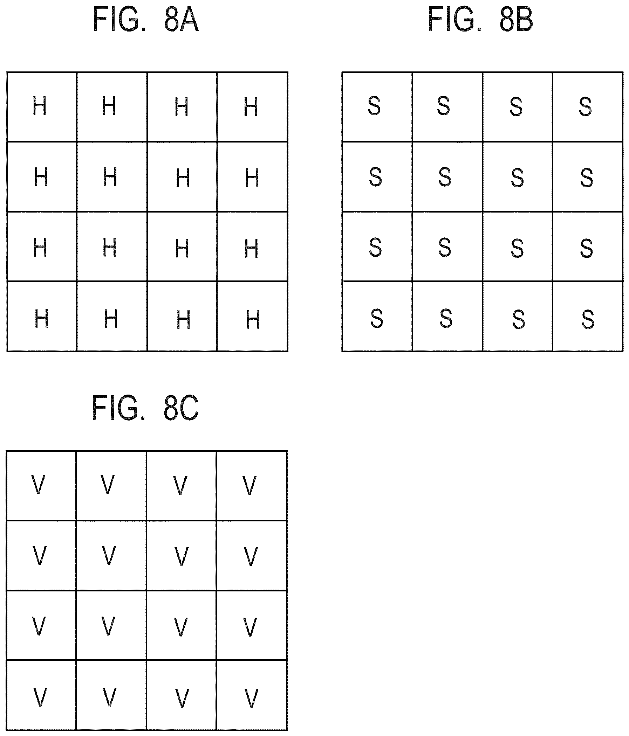

FIG. 8A schematically illustrates image data of hue (H), FIG. 8B schematically illustrates image data of saturation (S), and FIG. 8C schematically illustrates image data of value (V). The frames denoted by H, S, and V in FIGS. 8A to 8C schematically illustrate the arrangement of hue, saturation, and value in the image data.

In step S15, the composition coefficient calculating unit 203 adjusts the contrast of each of the infrared image data and the luminance information. Generally, there is a sensitivity difference between the pixel 10 for detecting visible light and the pixel 10 for detecting infrared light. This sensitivity difference can be adjusted by performing the present processes. As a specific example of the contrast adjustment, processes for remapping each of the values of the infrared image data and the values of the luminance information to the entire numerical range that can be taken in these data types.

In step S15, the contrast of both the infrared image data and the luminance information may be adjusted, but the contrast of only one of the infrared image data and the luminance information may be adjusted so as to bring one of the infrared image data and the luminance information closer to the other. That is, the processes in step S15 may be such that the contrast difference between the infrared image data and the luminance information is reduced.

In step S16, the composition coefficient calculating unit 203 subtracts the value of the contrast adjusted luminance information from the value of the contrast adjusted infrared image data for each pixel.

In step S17, the composition coefficient calculating unit 203 calculates a composition coefficient (map) that may have a different value for each pixel by normalizing the subtracted value, and outputs the result to the composition unit 204. For example, if the value of the infrared image data and the value of the luminance information are 8 bits (that is, values from 0 to 255) of data, the value range after subtraction is from -255 to 255. The normalization process in this case may be a process for converting the scale so that -255 corresponds to 0 and 255 corresponds to 1. By this normalization process, the composition coefficient is a value from 0 to 1. Thus, coefficients in a range suitable for a weighted addition in the composition processing described later can be obtained.

In step S18, the composition unit 204 generates luminance information (V') by composition performed by the weighted addition of the infrared image data and the luminance information by a composition coefficient. The luminance information acquired by the composition (fourth image data) is output to the HSV-RGB converting unit 205.

The weighted addition is performed, for example, as follows. The composition unit 204 calculates V'(x, y) based on an equation:

$$V'(x, y)=IR(x, y)\cdot(1\text{-}map(x, y))+V(x, y)\cdot map(x, y)$$

where (x, y) represents the coordinates of the pixel, V(x, y) represents the value of the luminance information, IR(x, y) represents the value of the infrared image data, map(x, y) represents the composition coefficient, and V'(x, y) represents the value of the luminance information after composition.

In step S19, the HSV-RGB converting unit 205 (second converting unit) adds the color information (HS) acquired from the RGB-HSV converting unit 202 to the luminance information (V') acquired from the composition unit 204 to convert them into color image data of the RGB model (fifth image data). The color image data is output from a signal processing unit 2 and stored in a memory unit 510 or a storage medium 514.

As described above, according to the present embodiment, the signal processing unit 2 calculates a composition coefficient based on the infrared image data and the luminance information, and generates a composition image by the weighted addition of the infrared image data and the luminance information by using the composition coefficient. The effect of such image composition will be described.

It is also possible to compose an image using a technique of replacing the luminance of color image data with infrared image data as disclosed in Japanese Patent Application Laid-open No. 2011-239259. This technique can reduce the effect of light scattering due to fog, haze, or the like, as disclosed in Japanese Patent Application Laid-Open No. 2011-239259. However, in the technique disclosed in Japanese Patent Application Laid-Open No. 2011-239259, an unnatural image may be generated depending on the optical characteristics of the object. For example, in trees, the reflectance of visible light is relatively low and that of infrared light is relatively high. Therefore, when a tree is included in the object and the luminance of the color image data of the portion of the tree is replaced with the infrared image data, the luminance of the portion of the tree is extremely high. In this case, an image in which the portion of the tree is brighter than the actual portion of the tree and has an unnatural contrast, an image in which the color balance between the portion of the tree and the other portions is different from the actual portion, or the like are generated. For this reason, the composition image may be unnatural depending on the optical characteristics such as the wavelength dependence of the reflectance of the object.

In the present embodiment, a composition image is generated by the weighted addition of infrared image data and luminance information by using a composition coefficient. For example, the composition coefficient can be set so that the weight of the visible light image may be high by setting high value of the composition coefficient in a portion where the reflectance of the infrared light is high, and the weight of the infrared light image may be high by setting low value of the composition coefficient in a portion where the reflectance of the infrared light is low. Such a composition coefficient can be obtained, for example, by subtracting the value of the luminance information from the value of the infrared image data as in the present embodiment. As a result, in the example of the image including the tree described above, since addition is performed so that the weight ratio of the visible light image is high in the portion of the tree, the effect of the problem that the luminance of the tree is high due to the high reflectance of the infrared light is reduced. Further, in a portion where, due to fog, haze, or the like, the reflectance of the infrared light is lower than the reflectance of visible light, addition is performed so as to increase the weight ratio of the infrared light image, so that the effect of light scattering due to fog and haze as described in Japanese Patent Application Laid-Open No. 2011-239259 can be reduced.

As described above, according to the present embodiment, an image processing device capable of generating a more natural composition image can be provided.

Second Embodiment

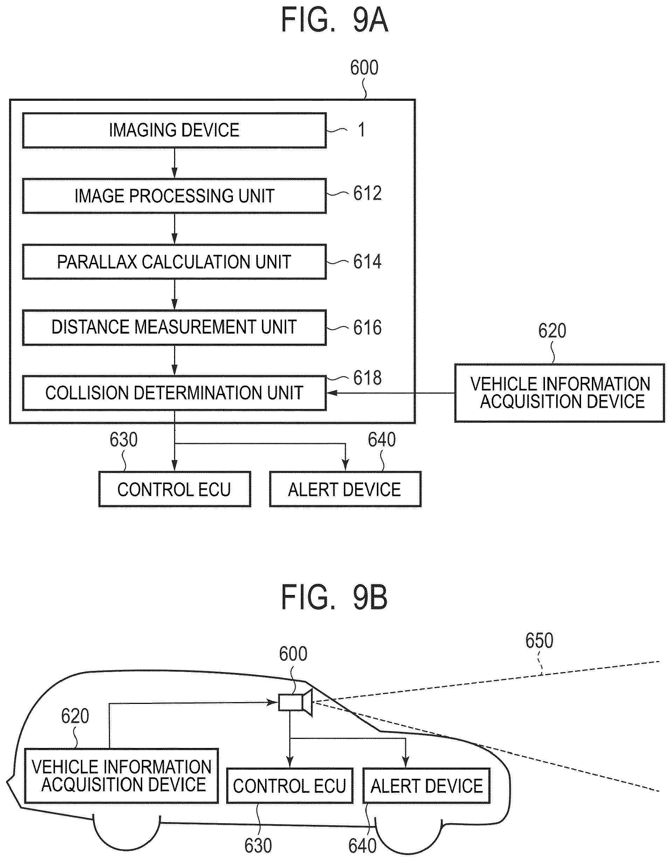

FIG. 9A and FIG. 9B are diagrams illustrating a configuration of an imaging system 600 and a moving body according to the present embodiment. FIG. 9A illustrates an example of an imaging system 600 related to an in-vehicle camera. An imaging system 600 has an imaging device 1 according to the above-described first embodiment. The imaging system 600 has an image processing unit 612 that performs image processing on a plurality of image data acquired by the imaging device 1 and a parallax calculation unit 614 that calculates a parallax (a phase difference of parallax images) from the plurality of image data acquired by the imaging system 600. The image processing unit 612 may have the function of the signal processing unit 2 of the first embodiment. Further, the function of the signal processing unit 2 of the first embodiment may be incorporated in the imaging device 1.

Further, the imaging system 600 has a distance measurement unit 616 that calculates a distance to the object based on the calculated parallax and a collision determination unit 618 that determines whether or not there is a collision possibility based on the calculated distance. Herein, the parallax calculation unit 614 and the distance measurement unit 616 are an example of a distance information acquisition unit that acquires distance information on the distance to the object. That is, the distance information is information on a parallax, a defocus amount, a distance to an object, or the like. The collision determination unit 618 may use any of the distance information to determine the collision possibility.

The distance information acquisition unit may be implemented by dedicatedly designed hardware or may be implemented by a software module. Further, the distance information acquisition unit may be implemented by a field programmable gate array (FPGA), an application specific integrated circuit (ASIC), or the like or may be implemented by a combination thereof.

The imaging system 600 is connected to the vehicle information acquisition device 620 and can acquire vehicle information such as a vehicle speed, a yaw rate, a steering angle, or the like. Further, the imaging system 600 is connected to a control ECU 630, which is a control device that outputs a control signal for causing a vehicle to generate braking force based on a determination result by the collision determination unit 618. That is, the control ECU 630 is an example of the distance information acquisition unit for controlling a moving body based on the distance information. Further, the imaging system 600 is also connected to an alert device 640 that issues an alert to the driver based on a determination result by the collision determination unit 618. For example, when the collision probability is high as the determination result of the collision determination unit 618, the control ECU 630 performs vehicle control to avoid a collision or reduce damage by applying a brake, pushing back an accelerator, suppressing engine power, or the like. The alert device 640 alerts a user by sounding an alert such as a sound, displaying alert information on a display of a car navigation system or the like, providing vibration to a seat belt or a steering wheel, or the like.

In the present embodiment, an area around a vehicle, for example, a front area or a rear area is captured by using the imaging system 600. FIG. 9B illustrates the configuration of the imaging system 600 when a front area of a vehicle (a capturing area 650) is captured. The vehicle information acquisition device 620 sends an instruction to operate the imaging system 600 to perform imaging. The imaging system 600 of the present embodiment including the imaging device 1 according to the first embodiment can further improve the accuracy of distance measurement.

Although the example of control for avoiding a collision to another vehicle has been described above, the embodiment is applicable to automatic driving control for following another vehicle, automatic driving control for not going out of a traffic lane, or the like. Furthermore, the imaging system is not limited to a vehicle such as the subject vehicle and can be applied to a moving body (moving apparatus) such as a ship, an airplane, an industrial robot, for example. In addition, the imaging system can be widely applied to a device which utilizes object recognition such as an intelligent transportation system (ITS) or the like, without being limited to moving bodies.

Other Embodiments

Note that, the above-described embodiments are merely examples of implementation in carrying out the present invention, and the technical scope of the present disclosure should not be construed in a limited manner. That is, the present invention can be implemented in various forms without departing from the technical idea or the main features thereof. For example, it should be understood that examples in which a part of the configuration of one embodiment is added to another embodiment, or examples in which a part of the configuration of another embodiment is replaced are also embodiments of the present invention.

In the first embodiment, the image processing performed in the signal processing unit 2 may be performed by a computer external to the imaging system 500. For example, the imaging system 500 may output the RAW data acquired by the imaging device 1 to an external computer, and the processor of the external computer may perform the image processing of steps S12 to S19 in FIG. 6 based on the image processing program. The image processing performed in the signal processing unit 2 may be performed in the imaging device 1. In this case, the imaging device 1 may be provided with a digital signal processing circuit including a processor for performing arithmetic processing for signal processing, a memory for temporarily storing data during arithmetic processing, or the like. The imaging system 500 may include a module in which a first substrate on which the imaging device 1 is provided and a second substrate on which the signal processing unit 2 is provided are stacked.

The calculation formula of V'(x, y) in step S18 of the first embodiment is an example, and other calculation formulas may be employed as long as a composition coefficient is used for weighting the luminance information and the infrared image data. For example, depending on the photographing condition, the influence of light scattering due to fog, haze or the like may be small. In such a case, a parameter for adjusting the composition coefficient may be included, such as adjusting the composition coefficient so that the weight of the luminance information is large. Further, in a photographing condition such as indoor photographing, there may be no influence of light scattering due to fog, haze, or the like. In such a case, the composition processing of the first embodiment may not be performed, or the composition processing may be invalidated by a method such as setting the map(x, y) to 1 regardless of (x, y).

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Provided is an image processing device including an acquisition unit configured to acquire a first image data that is captured based on visible light and a second image data that is captured based on infrared light, a composition coefficient calculating unit configured to calculate a composition coefficient based on the second image data and a third image data including a luminance information that is extracted from the first image data, and a composition unit configured to calculate a fourth image data by a weighted addition of the second image data and the luminance information by using the composition coefficient.

**Claims**

1.  An image processing device comprising:

    an acquisition unit configured to acquire a first image data that is captured based on visible light and a second image data that is captured based on infrared light;
    a composition coefficient calculating unit configured to calculate a composition coefficient based on the second image data and a third image data including a luminance information that is extracted from the first image data; and
    a composition unit configured to calculate a fourth image data by a weighted addition of the second image data and the luminance information by using the composition coefficient.

2.  The image processing device according to claim 1, wherein the composition coefficient calculating unit calculates the composition coefficient by subtracting a value based on the luminance information from a value based on the second image data.

3.  The image processing device according to claim 2, wherein the composition coefficient calculating unit performs a normalization that converts the composition coefficient into a value in a predetermined range.

4.  The image processing device according to claim 2 or 3, wherein the composition coefficient calculating unit performs a calculation of the composition coefficient after adjusting a contrast difference between the second image data and the luminance information.

5.  The image processing device according to any one of claims 1 to 4 further comprising:

    a first converting unit configured to generate the third image data by extracting the luminance information and a color information from the first image data; and
    a second converting unit configured to generate a fifth image data by adding the color information to the fourth image data.

6.  The image processing device according to any one of claims 1 to 5, wherein the composition unit performs a calculation of the fourth image data based on an equation:

$$V'(x, y)=IR(x, y)\cdot(1-map(x, y))+V(x, y)\cdot map(x, y)$$

where (x, y) represents a coordinate of a pixel, V(x, y) represents a value of the luminance information, IR(x, y) represents a value of the second image data, map(x, y) represents the composition coefficient, and V'(x, y) represents a value of the fourth image data.

7. The image processing device according to any one of claims 1 to 6, wherein the first image data is a color image data based on an RGB model.

8. The image processing device according to any one of claims 1 to 7, wherein the third image data is a color image data based on an HSV model, an HLS model, or a YCbCr model.

9. An imaging system comprising:

   an imaging device configured to perform capturing of the first image data based on the visible light and the second image data based on the infrared light; and
   the image processing device according to any one of claims 1 to 8.

10. A moving body comprising:

    an imaging device configured to perform capturing of the first image data based on the visible light and the second image data based on the infrared light;
    the image processing device according to any one of claims 1 to 8;
    a distance information acquisition unit configured to acquire distance information on a distance to an object, from a parallax image based on signals from the imaging device; and
    a control unit configured to control the moving body based on the distance information.

11. An image processing method comprising:

    acquiring a first image data that is captured based on visible light and a second image data that is captured based on infrared light;
    calculating a composition coefficient based on the second image data and a third image data including a luminance information that is extracted from the first image data; and
    calculating a fourth image data by a weighted addition of the second image data and the luminance information by using the composition coefficient.

12. A program that causes a computer to perform an image processing method comprising:

    acquiring a first image data that is captured based on visible light and a second image data that is captured based on infrared light;
    calculating a composition coefficient based on the second image data and a third image data including a luminance information that is extracted from the first image data; and
    calculating a fourth image data by a weighted addition of the second image data and the luminance information by using the composition coefficient.

# FIG. 1

FIG. 2

# FIG. 3

# FIG. 4

| R | G | R | G |
|---|---|---|---|
| IR | B | IR | B |
| R | G | R | G |
| IR | B | IR | B |

# FIG. 5

# FIG. 6

START

S11 — CAPTURE AN OBJECT

S12 — ACQUIRE
IMAGE DATA INCLUDING RGB DATA AND IR DATA

S13 — SEPARATE RGB DATA FROM IR DATA

S14 — CONVERT RGB DATA INTO HSV DATA

S15 — ADJUST A CONTRAST DIFFERENCE
BETWEEN IR DATA AND V DATA

S16 — SUBTRACT V DATA FROM IR DATA

S17 — CALCULATE A COMPOSITION COEFFICIENT
BY NORMALIZING A SUBTRACTED VALUE

S18 — PERFORM COMPOSITION
BY WEIGHTED ADDITION OF V DATA AND IR DATA
BY USING THE COMPOSITION COEFFICIENT

S19 — CONVERT
COMPOSITE V DATA AND HS DATA INTO RGB DATA

END

## FIG. 7A

| R | R | R | R |
|---|---|---|---|
| R | R | R | R |
| R | R | R | R |
| R | R | R | R |

## FIG. 7B

| G | G | G | G |
|---|---|---|---|
| G | G | G | G |
| G | G | G | G |
| G | G | G | G |

## FIG. 7C

| B | B | B | B |
|---|---|---|---|
| B | B | B | B |
| B | B | B | B |
| B | B | B | B |

## FIG. 7D

| IR | IR | IR | IR |
|----|----|----|----|
| IR | IR | IR | IR |
| IR | IR | IR | IR |
| IR | IR | IR | IR |

## FIG. 8A

| | | | |
|---|---|---|---|
| H | H | H | H |
| H | H | H | H |
| H | H | H | H |
| H | H | H | H |

## FIG. 8B

| | | | |
|---|---|---|---|
| S | S | S | S |
| S | S | S | S |
| S | S | S | S |
| S | S | S | S |

## FIG. 8C

| | | | |
|---|---|---|---|
| V | V | V | V |
| V | V | V | V |
| V | V | V | V |
| V | V | V | V |

# FIG. 9A

600

```
┌─────────────────────────────────────────┐
│  ┌───────────────────────────────┐       │
│  │        IMAGING DEVICE         │─ 1    │
│  └───────────────────────────────┘       │
│                 │                         │
│                 ▼                         │
│  ┌───────────────────────────────┐       │
│  │     IMAGE PROCESSING UNIT     │─ 612  │
│  └───────────────────────────────┘       │
│                 │                         │
│                 ▼                         │
│  ┌───────────────────────────────┐       │
│  │   PARALLAX CALCULATION UNIT   │─ 614  │
│  └───────────────────────────────┘       │
│                 │                         │
│                 ▼                         │
│  ┌───────────────────────────────┐       │
│  │   DISTANCE MEASUREMENT UNIT   │─ 616  │
│  └───────────────────────────────┘       │
│                 │                         │
│                 ▼                   618   │
│  ┌───────────────────────────────┐       │
│  │  COLLISION DETERMINATION UNIT │◄──────┼──
│  └───────────────────────────────┘       │
└─────────────────────────────────────────┘
```

620

VEHICLE INFORMATION ACQUISITION DEVICE

630                           640

CONTROL ECU      ALERT DEVICE

# FIG. 9B

650

600

620

VEHICLE INFORMATION ACQUISITION DEVICE      CONTROL ECU      ALERT DEVICE

630            640

17

Europäisches
Patentamt

European
Patent Office

Office européen
des brevets

# EUROPEAN SEARCH REPORT

Application Number

EP 21 17 9424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/336664 A1 (ONO MITSUHIRO [JP]) 22 November 2018 (2018-11-22) | 1-4,6,7, 9,11,12 | INV. H04N5/33 |
| Y | * paragraph [0029] - paragraph [0032] * * paragraph [0066] - paragraph [0077] * * figures 2,7,10 * ----- | 5,8,10 | H04N9/04 H04N9/07 H04N9/64 H04N9/67 |
| Y | US 2009/002475 A1 (JELLEY KEVIN W [US] ET AL) 1 January 2009 (2009-01-01) * paragraph [0016] - paragraph [0021] * * paragraph [0030] - paragraph [0033] * ----- | 5,8 | H04N1/60 H04N5/265 H04N5/232 B60R1/00 H04N5/247 |
| Y | US 2018/197022 A1 (FUJIKAWA TETSUYA [JP]) 12 July 2018 (2018-07-12) * paragraph [0069] - paragraph [0073] * * figures 1-3 * ----- | 10 | H04N7/18 |
| A | US 2020/053297 A1 (TOKIZAKI YUKI [JP] ET AL) 13 February 2020 (2020-02-13) * paragraph [0374] - paragraph [0384] * * figures 4, 19 * ----- | 1-12 | |

TECHNICAL FIELDS SEARCHED (IPC)

H04N
B60R

The present search report has been drawn up for all claims

| Place of search | Date of completion of the search | Examiner |
|---|---|---|
| The Hague | 2 November 2021 | Rocca, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 9424

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2021

| Patent document cited in search report | | Publication date | Patent family member(s) | | Publication date |
|---|---|---|---|---|---|
| US 2018336664 | A1 | 22-11-2018 | JP | 6564421 B2 | 21-08-2019 |
| | | | JP | 2018195085 A | 06-12-2018 |
| | | | US | 2018336664 A1 | 22-11-2018 |
| US 2009002475 | A1 | 01-01-2009 | EP | 2179571 A2 | 28-04-2010 |
| | | | US | 2009002475 A1 | 01-01-2009 |
| | | | WO | 2009002902 A2 | 31-12-2008 |
| US 2018197022 | A1 | 12-07-2018 | CN | 108027976 A | 11-05-2018 |
| | | | JP | 6291144 B2 | 14-03-2018 |
| | | | JP | 2018101437 A | 28-06-2018 |
| | | | JP | WO2017043067 A1 | 24-05-2018 |
| | | | US | 2018197022 A1 | 12-07-2018 |
| | | | WO | 2017043067 A1 | 16-03-2017 |
| US 2020053297 | A1 | 13-02-2020 | JP | WO2018163725 A1 | 09-01-2020 |
| | | | US | 2020053297 A1 | 13-02-2020 |
| | | | WO | 2018163725 A1 | 13-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011239259 A